# EUROPÄISCHE PATENTSCHRIFT

(11) **EP 1 473 540 B1**
(45) Veröffentlichungstag und Bekanntmachung des Hinweises auf die Patenterteilung: **02.11.2011**
(21) Anmeldenummer: 04007930.3
(22) Anmeldetag: 01.04.2004
(51) Int. Cl.: G01C 15/00, G01C 1/00

(54) **Verfahren zur Bestimmung des Niveaus mehrerer Messpunkte sowie Anordnung dafür**
Method and device for determining the level of a plurality of measuring points
Procédé et dispositif pour déterminer le niveau de plusieurs points de mesure

(30) Priorität: 29.04.2003 DE 10319369
(43) Veröffentlichungstag der Anmeldung: 03.11.2004
(73) Patentinhaber: Prüftechnik Dieter Busch AG, 85737 Ismaning (DE)
(72) Erfinder: Ströl, Klaus, 85652 Gelting (DE)

(56) Entgegenhaltungen:
- EP-A- 1 245 926
- US-A- 3 649 122
- PATENT ABSTRACTS OF JAPAN Bd. 2000, Nr. 11, 3. Januar 2001 (2001-01-03) & JP 2000 213937 A (ASAHI OPTICAL CO LTD), 4. August 2000 (2000-08-04)
- PATENT ABSTRACTS OF JAPAN Bd. 2000, Nr. 05, 14. September 2000 (2000-09-14) & JP 2000 046551 A (ASAHI OPTICAL CO LTD), 18. Februar 2000 (2000-02-18)

## Beschreibung

Die vorliegende Erfindung bezieht sich auf ein Verfahren und eine Anordnung zur Bestimmung des Niveaus mehrerer Messpunkte gemäß dem Oberbegriff von Anspruch 1 bzw. 7.

Aus der JP 2000-46551 bzw. der JP 2000-213937 ist ein gattungsgemäßes Verfahren bzw. eine gattungsgemäße Anordnung bekannt, wobei die Strahlrichtung eines Lasers genau in eine gewünschte azimutale Drehrichtung gelenkt wird. Hierzu wird der Strahl einer Laserdiode, der senkrecht nach oben emittiert wird, mit einem Pentagonalprisma um 90° abgelenkt. Das Pentagonalprisma rotiert den Laserstrahl in einer Ebene senkrecht zu Emissionsrichtung. Zur Bestimmung des jeweiligen Drehwinkels dieser Rotation wird ein Encoder mit eine runden Encoderplatte benutzt und über ein Encodersensor wird der Drehwinkel ausgewertet. Um damit die Position eines Messpunktes zu bestimmen, muss mit einem zusätzlichen Messverfahren bei Verwendung von Zylinderkoordinaten dessen Höhe z über einer horizontalen Referenzebene (z.B. der Rotationsebene des Laserstrahls) bestimmt werden, sowie mit einem weiteren Messverfahren dessen radialer Abstand von einer senkrechten Referenzachse (z.B. der Emissionsachse des Lasers).

Es ist Aufgabe der vorliegenden Erfindung, eine Anordnung bzw. ein Verfahren zur Bestimmung des Niveaus mehrerer Messpunkte zu schaffen, welche bzw. welches die präzise Messung des Drehwinkels und der Höhe mit einem einzigen Messverfahren und Detektor erlaubt und damit die Messung erleichtert und die Produktionskosten und Baugröße der Anordnung reduziert.

Diese Aufgabe wird erfindungsgemäß gelöst durch ein Verfahren gemäß Anspruch 1 und einer Vorrichtung gemäß Anspruch 7. Dabei ist vorteilhaft, dass mittels der Erfassung der Vorzugsrichtung der Querschnittsintensitätsverteilung des Lichtstrahls auf der Detektorfläche für jeden Messpunkt ohne zusätzliche Messung zu der eigentlichen Niveaumessung der Drehwinkel des jeweiligen Messpunkts bezüglich der Lichtquelle bestimmt werden kann, so dass zur Bestimmung der Raumkoordinaten eines jeden Messpunkts lediglich noch der Abstand von der Lichtquelle bestimmt werden muss.

Bei dem Lichtstrahl handelt es sich vorzugsweise um einen Emissionsstrahl eines Halbleiterlasers, bei dem das emittierte Licht bereits eine Vorzugsrichtung der Querschnittsintensitätsverteilung beinhaltet. Der Detektor ist vorzugsweise ein CCD-Chip und das Element zur Umlenkung des Lichtstrahls um 90° ist vorzugsweise ein Pentagonalprisma.

Weitere bevorzugte Ausgestaltungen der Erfindung ergeben sich aus den abhängigen Ansprüchen.

Im folgenden wird die Erfindung anhand der beigefügten Zeichnungen beispielhaft näher erläutert. Dabei zeigen:
Fig. 1a und 1b ist jeweils eine schematische Seitenansicht einer erfindungsgemäßen Anordnung zum Ermitteln der Koordinaten eines Messpunktes, der in einer Referenzebene liegt bzw. der um eine bestimmte Distanz oberhalb der Referenzebene liegt.
Fig. 2 eine Aufsicht von oben auf die Anordnung von Fig. 1a;
Fig. 3a, b und c schematisch die Abbildung des Laserstrahls auf dem Detektor für Drehwinkel des umgelenkten Strahls von 45°, 90° und 0°.
Fig. 4 eine schematische perspektivische Ansicht der Anordnung von Fig. 1 wobei sich der Detektor an einem Messpunkt steht, der sich in Richtung eines Drehwinkels ϕ von 45° befindet;
Fig. 5 eine schematische perspektivische Ansicht entsprechend der Fig. 4, wobei der Detektor hier an einem anderen Messpunkt steht, der sich in Richtung eines Drehwinkels ϕ von 135° befindet;

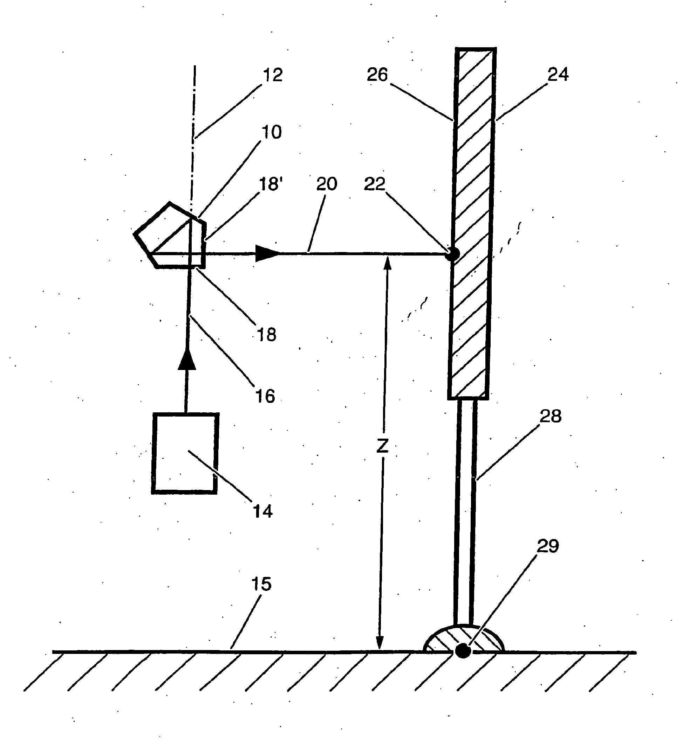

Fig. 1a zeigt eine schematische Seitenansicht einer erfindungsgemäßen Anordnung, wobei ein hier nicht gezeigter Halter ein Pentagonalprisma 10 trägt, welches auf dem Halter um eine lotrechte Achse 12 drehbar und fixierbar ist. Aus einer Lichtquelle 14, die vorzugsweise ein Halbleiterlaser ist und mit einer nicht gezeigten Halterung über einer Ebene 15 fixiert ist, tritt ein Strahl in eine Richtung 16, die vorzugsweise senkrecht nach oben zeigt, aus und fällt auf eine Fläche 18 des Pentagonalprismas 10. Die Ebene 15 kann z.B. eine fur das Aufstellen einer Maschine bestimmte Bodenplatte eines Gebäudes sein, die bezüglich lokaler Unebenheiten vermessen werden soll. Ein Pentagonalprisma hat die bekannte Eigenschaft, dass ein Lichtstrahl, der auf eine der Flächen 18 oder 18' auftrifft, unabhängig vom Einfallswinkel immer um 90° gedreht reflektiert und damit abgelenkt wird, ohne die Orientierung des entsprechenden Bildes zu ändern, wobei eine Änderung des Einfallswinkels lediglich zu einem Parallelversatz des abgelenkten Strahls führt. Grundsätzlich können jedoch auch andere Umlenkelemente verwendet werden, wie beispielsweise ein normaler Planspiegel, ein Winkelspiegel oder ein entsprechend gebogenes Faserbündel.

Wie in Fig. 1a gezeigt, liegen im gezeigten Beispiel die Richtungen 16 und 20 des einfallenden und reflektierten Strahls in einer Ebene, die senkrecht auf den beiden Flächen 18 und 18' steht. Nach dieser Umlenkung fallt der Strahl horizontal in einer Hohe z über der Ebene 15 bei einem Auftreffpunkt 22 auf einen Detektor 24 mit einer Detektorfläche 26. Die Detektorfläche 26 besteht vorzugsweise aus einem insbesondere zweidimensional erfassenden CCD-Chip oder einem C-MOS-Sensor und ist so ausgebildet, dass mittels einer Vielzahl von Pixeln das räumliche Bild der Querschnitts-Intensitätsverteilung des auftreffenden Strahls bestimmt werden kann. Der Halter 28 kann auf der Ebene 15 verschoben und auf diese Weise an einem Messpunkt 29 auf der Ebene 15 positioniert werden. Mit dem im folgenden beschriebenen Verfahren sollen das vertikale Niveau des Messpunktes 29 bzgl. der Ebene 15 und die horizontale Position des Messpunktes 29 in der Ebene 15 erfasst werden.

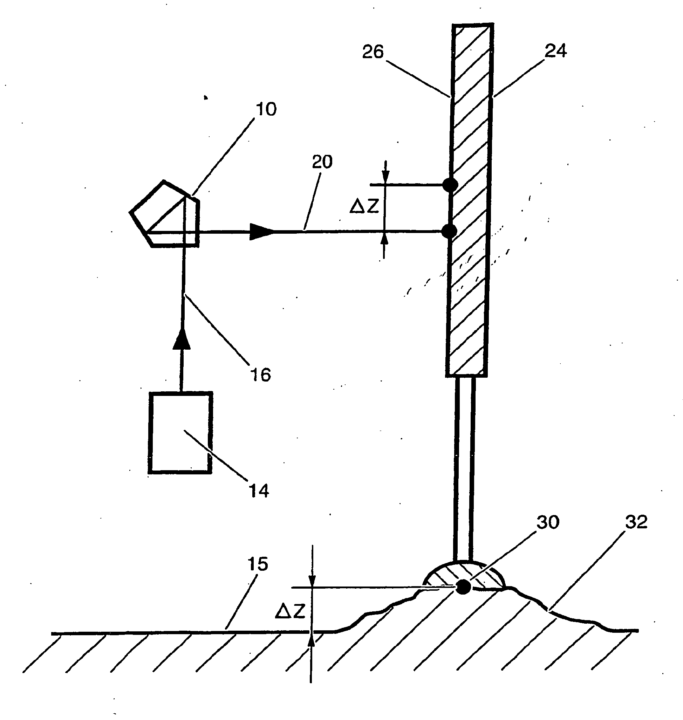

Fig. 1b zeigt eine Situation entsprechend der in Fig. 1a, wobei sich der Messpunkt 30 nun auf einer Unebenheit 32 der Ebene 15 liegt. Der horizontale Strahl in Richtung 20 trifft nun in einer um Δz reduzierten Höhe auf die Detektorfläche 26, wenn die Unebenheit eine Höhe Δz aufweist. Die jeweilige Höhe kann durch Auslesen des CCD Chips einfach bestimmt werden, indem der Schwerpunkt der Lichtintensitätsverteilung mit einer Bildverarbeitungssoftware ermittelt wird. Bei Messungen an verschiedenen Messpunkten können die relativen Höhenänderungen so direkt gewonnen werden. Somit können die vertikalen Abweichungen verschiedener Messpunkte bzgl. der Ebene 15 erfasst werden.

Um die horizontale Position der Messpunkte zu erfassen, müssen für jeden Messpunkt noch zwei weitere Raumkoordinaten ermittelt werden. Dies kann z.B. in Zylinderkoordinaten geschehen, wo die beiden zusätzlichen Koordinaten dann der Winkel ϕ (Azimut) und der Radius R sind.

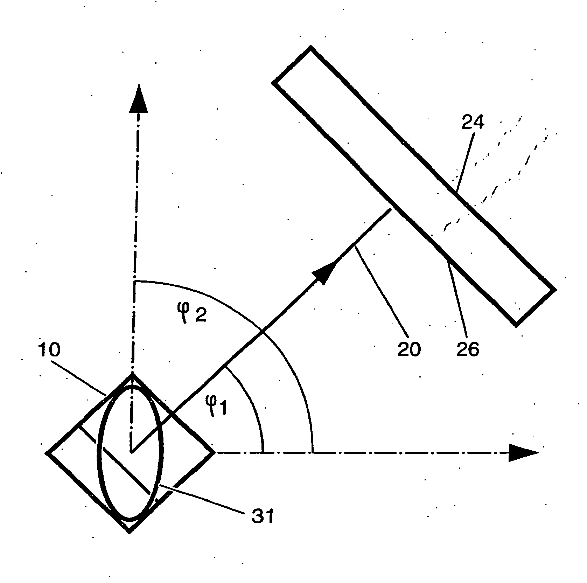

In Fig. 2 ist eine Aufsicht von oben auf die Anordnung aus Fig. 1 a gezeigt. Der abgelenkte Strahl in Richtung 20 wird unter einem Winkel ϕ 1 bezüglich einer Bezugsrichtung auf den Detektor 24 abgestrahlt. ϕ 1 sei hier 45°. Die Verwendung eines Pentagonalprismas zur Strahlablenkung hat dabei den Vorteil, dass jede Verkippung des Prismas bezüglich der Vertikalen allenfalls zu einem Strahlversatz, nicht aber zu einer Verkippung aus der Horizontalen heraus führt. Damit können Fehler bei der Bestimmung der horizontalen Abweichung der Messpunkte gering gehalten werden.

Ebenfalls in Fig. 2 angedeutet sind die Richtungen ϕ2 = 90° und ϕ3 = 0° von zwei anderen Messpunkten.

Der entlang der Richtung 16 emittierte Strahl hat eine Vorzugsrichtung seiner Querschnittsintensitätsverteilung. In Fig. 2 hat der entlang der Richtung 16 emittierte Strahl Linien konstanter Lichtintensität mit elliptischer Form (von denen eine beispielhaft mit dem Bezugszeichen 31 bezeichnet in Fig. 2 angedeutet ist) mit einer Vorzugsrichtung (d.h. mit einer Längssymmetrieachse, der Ellipse). Die Vorzugsrichtung der Ellipse 31 zeigt im Beispiel von Fig. 2 in die Richtung ϕ = 90°.

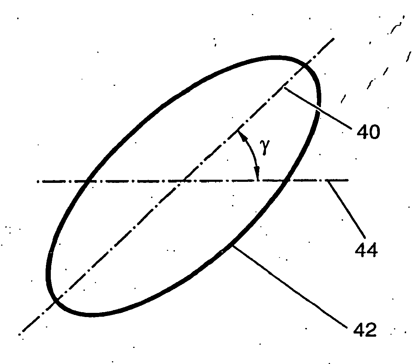

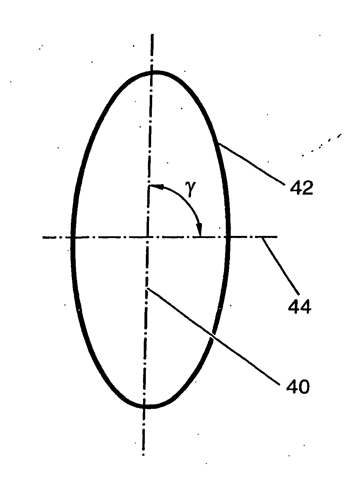

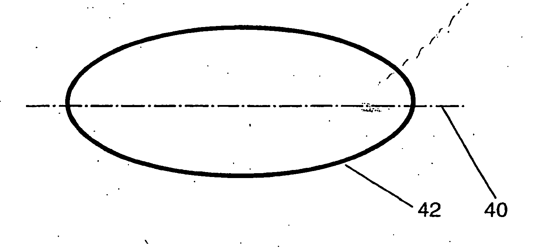

In den Figuren 3a, 3b und 3c sind schematisch die Querschnittsintensitätsverteilungen als Linien konstanter Intensität 42 des abgelenkten, horizontalen Strahls in Richtung 20 beim Auftreffen auf die Detektorfläche 26 für die drei Richtungen ϕ1 = 45°, ϕ2 = 90° und ϕ3 = 0° des Strahls in Richtung 20 gezeigt. Es besteht ein linearer Zusammenhang zwischen der Winkel-Orientierung γ der Vorzugsrichtung 40 der Querschnittsintensitätsverteilung auf der Detektorfläche 26 bezüglich einer Bezugsrichtung 44 und dem zumeist azimutalen Drehwinkel ϕ des Messpunktes. Genauer gesagt tritt der Winkel ϕ hier als Winkel γ zwischen der Vorzugsrichtung 40 der Querschnittsintensitätsverteilung und der Bezugsrichtung 44 wieder auf. Beispielsweise dreht sich bei einer Rotation des Pentagonalprismas 10 um die vertikale Achse 16 um 360° auch die Vorzugsrichtung 40 der Querschnittsintensitatsverteilung auf der Detektorfläche 26 (die natürlich so mitgeführt werden muss, dass der Sensor die Querschnittsintensitätsverteilung erfassen kann) um 360°. Durch eine Auswertung der Querschnittsintensitätsverteilung des Lichtstrahls auf der Detektorfläche 26 durch Auslesen des CCD-Chips und eine Bestimmung des Winkels γ zwischen der Bezugsrichtung 44 und der ermittelten Vorzugsrichtung 40 der Querschnittsintensitätsverteilung lässt sich damit der Drehwinkel ϕ des Strahls in Richtung 20 für den jeweiligen Messpunkte bestimmen: Diese Auswertung kann von der Bildverarbeitungssoftware durchgeführt werden, die auch den Schwerpunkt der Querschnittsintensitätsverteilung auf der Detektorfläche 26 und damit die Höhe des Auftreffpunktes des Laserstrahls auf der Detektoroberfläche 26 ermittelt. Hierzu wird beispielsweise zunächst die Umrisskontur der Intensitätsverteilung ermittelt, und anhand dieser kann danach der Schwerpunkt bestimmt werden.

Wie oben beschrieben, wird zur Ermittlung der Position der verschiedenen Messpunkte noch der radiale Abstand der Messpunkte zur Ursprungsachse - welche hier durch den Strahl in Richtung 16 definiert wird- benötigt. Methoden hierzu sind dem Fachmann bekannt und sollen deshalb nicht näher erläutert werden.

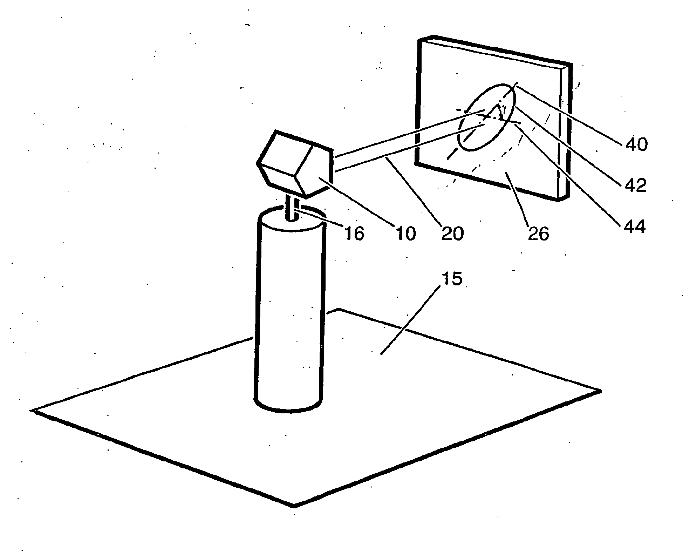

Fig. 4 zeigt eine perspektivische Darstellung der Anordnung von Fig. 1a, 2 und 3a für einen Drehwinkel von 45°. Wie gezeigt ist die Vorzugsrichtung 40 der Querschnittsintensitätsverteilung um ebenfalls 45° gegen die Horizontale gedreht.

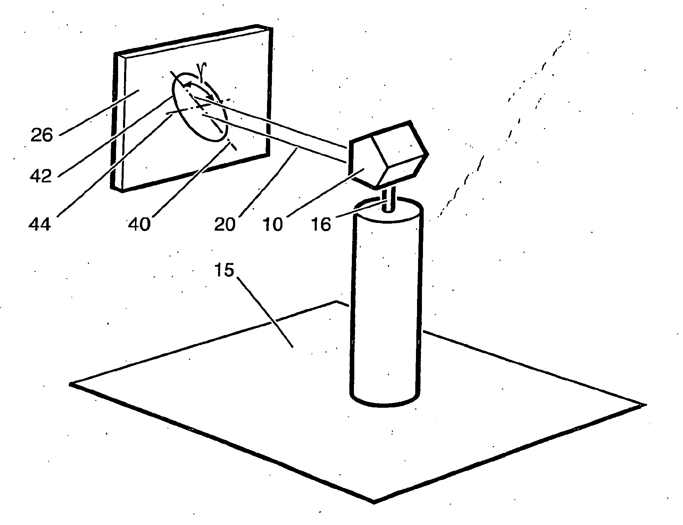

Fig. 5 zeigt eine ähnliche Darstellung wie Fig. 4, aber für einen Drehwinkel von 135°. Entsprechend ist hier die Vorzugsrichtung 40 der Querschnittsintensitätsverteilung um 135° gegen die Horizontale gedreht.

Der Vorteil der erfindungsgemäßen Methode und der erfindungsgemäßen Vorrichtung ist die Möglichkeit, mit dem Detektor 24, der für die Messung der z-Koordinate des Auftreffpunktes 22 verwendet wird, auch eine zweite Raumkoordinate zu bestimmen, nämlich den Winkel ϕ. Ein zusätzliches Sensorsystem wie z.B. ein gemäß dem Stand der Technik verwendete Encoder mit runder Encoderplatte und Encodersensor zur Ermittlung des Drehwinkels ϕ kann entfallen. Damit können Produktionskosten und Größe der Anordnung deutlich reduziert werden und ferner kann das Messverfahren insgesamt vereinfacht werden.

Der Vorteil bei der Verwendung eines Halbleiterlasers ist die Tatsache, dass hier die Querschnittsintensitätsverteilung des Laserstrahls bereits eine Vorzugsrichtung hat und eine solche nicht erst durch ein zusätzliches Linsensystem erzeugt werden muss.

Alternativ kann die Querschnittsverteilung, die nicht radialsymmetrisch sein darf, durch eine Zylinderlinse oder ein Linsensystem geformt werden.

Bei einer weiteren Ausführungsform dieser Erfindung ist. die Querschnittsintensitätsverteilung nicht elliptisch, sondern hat eine nicht zentralsymmetrische Form, wie sie durch ein entsprechendes optisches Element, z.B. durch eine dreieckige Blende, erzielt werden kann. Der Vorteil dieser Ausfiihrungsform ist, dass mit ihr auch Messungen über den Vollwinkel von 360° durchgeführt werden können, was bei einer zentralsymmetrischen Form nur bis 180° möglich ist. Mit einer solchen nicht zentralsymmetrischen Form der Querschnittsintensitätsverteilung könnte dann beispielsweise in der Darstellung von Fig. 5 unterschieden werden, ob der Drehwinkel γ wie gezeigt 135° beträgt oder stattdessen in Wahrheit 315° beträgt.

## Patentansprüche

1. Verfahren zur Bestimmung des Niveaus mindestens zweier Messpunkte (29, 30), wobei ein Lichtstrahl entlang einer ersten Richtung (16) erzeugt wird, der Lichtstrahl um 90° zur ersten Richtung in eine zweite Richtung (20) umgelenkt wird, wobei die zweite Richtung entsprechend der Lage des Messpunkts um einen Drehwinkel um eine von der ersten Richtung gebildeten Achse gedreht wird, **dadurch gekennzeichnet, dass** der Lichtstrahl eine Querschnittsintensitätsverteilung (42) mit einer Vorzugsrichtung (40) aufweist und nach der Umlenkung in die zweite Richtung auf eine Detektorfläche (26) fällt, die nacheinander an jedem Messpunkt (29, 30) postiert wird, wobei das Auftreffniveau des Lichtstrahls und die Orientierung der Vorzugsrichtung der Querschnittsintensitätsverteilung des Lichtstrahls auf der Detektorfläche für jeden Messpunkt bestimmt werden, und wobei der Drehwinkel für jeden Messpunkt aus der jeweiligen Orientierung der Vorzugsrichtung auf der Detektorfläche bestimmt wird.

2. Verfahren gemäß Anspruch 1, **dadurch gekenzeichnet, dass** die Niveaus der Messpunkte (29, 30) als Abweichung von einer Referenzebene (15) bestimmt werden, wobei die erste Richtung (16) senkrecht zu der Referenzebene steht.

3. Verfahren gemäß Anspruch 1, **dadurch gekennzeichnet, dass** aus den gemessenen Niveaus der Messpunkte (29, 30) die Referenzebene (15) als Ausgleichsebene bezüglich der Niveaus bestimmt wird.

4. Verfahren gemäß Anspruch 1, **dadurch gekennzeichnet, dass** ein Linsensystem oder eine Blende zwischen Lichtquelle und Detektor gebracht wird, um die Vorzugsrichtung der Querschnittsintensitätsverteilung des Lichtstrahls zu erzeugen.

5. Verfahren gemäß Anspruch 1, **dadurch gekennzeichnet, dass** als Lichtquelle (14) ein Halbleiterlaser benutzt wird, dessen Lichtintensität im Fernfeld eine Vorzugsrichtung (40) der Querschnittsintensitätsverteilung aufweist.

6. Verfahren gemäß Anspruch 1, **dadurch gekennzeichnet, dass** der Detektor als Flächensensor (24) ausgebildet ist.

7. Anordnung zur Bestimmung des Niveaus mindestens zweier Messpunkte (29, 30), mit einer Detektorfläche (26) und mit einer Lichtquelle (16), die zur Erzeugung eines Lichtstrahls entlang einer ersten Richtung (16) ausgebildet ist, einer Umlenkeinrichtung (10), um den Lichtstrahl um 90° zur ersten Richtung in eine zweite Richtung (20) umzulenken, wobei die Umlenkeinrichtung um eine von der ersten Richtung gebildeten Achse (12) drehbar ist, um die zweite Richtung entsprechend der Lage des jeweiligen Messpunkts zu drehen **dadurch gekennzeichnet, dass** der Lichtstrahl eine Querschnittsintensitätsverteilung (42) mit einer Vorzugsrichtung (40) hat, und nach der Umlenkung in die zweite Richtung auf die nacheinander an jedem Messpunkt (29, 30) anzuordnende Detektorfläche (26) fällt, und wobei die Detektorfläche ausgebildet ist, um das Auftreffniveau des Lichtstrahls und die Orientierung der Vorzugsrichtung der Querschnittsintensitätsverteilung des Lichtstrahls auf der Detektorfläche für jeden Messpunkt zu bestimmen.

8. Anordnung gemäß Anspruch 7, **dadurch gekennzeichnet, dass** die Umlenkeinrichtung aus einem Pentagonalprisma (10), einem Spiegel oder einem Faserbündel besteht.

9. Anordnung gemäß Anspruch 7, **dadurch gekennzeichnet, dass** die Detektorfläche (26) ein Bilderfassungssensor (24) mit mehreren Spalten und Zeilen von lichtempfindlichen Elementen ist.

10. Anordnung gemäß Anspruch 9, **dadurch gekennzeichnet, dass** der Bilderfassungssensor (24) ein CCD-Chip oder ein C-MOS-Sensor ist.

11. Anordnung gemäß Anspruch 7, **dadurch gekennzeichnet, dass** die Lichtquelle (14) ein Laser ist.

12. Anordnung gemäß Anspruch 11, **dadurch gekennzeichnet, dass** die Lichtquelle (14) als Laserdiode ausgebildet ist, wobei der Lichtstrahl im Fernfeld der Laserdiode eine elliptische Querschnittsintensitätsverteilung hat.

13. Anordnung gemäß einem der Ansprüche 7 bis 12, **dadurch gekennzeichnet, dass** sich zwischen der Lichtquelle (14) und der Umlenkeinrichtung (10) ein Linsensystem mit mindestens einer Zylinderlinse befindet.

14. Anordnung gemäß einem der Ansprüchen 7 bis 12, **dadurch gekennzeichnet, dass** sich zwischen der Lichtquelle (14) und der Umlenkeinrichtung (10) mindestens ein optischen Element mit einer nicht radialsymmetrischen Öffnung befindet.

15. Anordnung gemäß Anspruch 14, **dadurch gekennzeichnet, dass** die Öffnung nicht zentralsymmetrisch ist.

## Claims

1. Method for determining the level of at least two measurement points (29, 30), wherein a light beam is generated along a first direction (16), the light beam is deflected by 90° with respect to the first direction into a second direction (20), wherein the second direction is rotated about a rotational angle about an axis formed by the first direction in accordance with the position of the measurement point, **characterized in that** the light beam has a cross-sectional intensity distribution (42) with a preferred direction (40) and, after the deflection into the second direction, impinges on a detector surface (26), which is successively positioned at each measurement point (29, 30), wherein the impingement level of the light beam and the orientation of the preferred direction of the cross-sectional intensity distribution of the light beam are determined on the detector surface for each measurement point, and wherein the rotational angle for each measurement point is determined from the respective orientation of the preferred direction on the detector surface.

2. Method according to Claim 1, **characterized in that** the levels of the measurement points (29, 30) are determined as a deviation from a reference plane (15), wherein the first direction (16) is perpendicular to the reference plane.

3. Method according to Claim 1, **characterized in that**, from the measured levels of the measurement points (29, 30), the reference plane (15) is determined as a balancing plane with respect to the levels.

4. Method according to Claim 1, **characterized in that** a lens system or a stop is introduced between light source and detector in order to generate the preferred direction of the cross-sectional intensity distribution of the light beam.

5. Method according to Claim 1, **characterized in that** a semiconductor laser is used as a light source (14), the light intensity of which in the far-field has a preferred direction (40) of the cross-sectional intensity distribution.

6. Method according to Claim 1, **characterized in that** the detector is embodied as an area sensor (24).

7. Arrangement for determining the level of at least two measurement points (29, 30), with a detector surface (26) and with a light source (16), which is embodied to generate a light beam along a first direction (16), a deflection apparatus (10) for deflecting the light beam by 90° with respect to the first direction into a second direction (20), wherein the deflection apparatus is rotatable about an axis (12) formed by the first direction in order to rotate the second direction in accordance with the position of the respective measurement point, **characterized in that** the light beam has a cross-sectional intensity distribution (42) with a preferred direction (40), and, after the deflection into the second direction, impinges on the detector surface (26), which should successively be arranged at each measurement point (29, 30), and wherein the detector surface is designed to determine the impingement level of the light beam and the orientation of the preferred direction of the cross-sectional intensity distribution of the light beam on the detector surface for each measurement point.

8. Arrangement according to Claim 7, **characterized in that** the deflection apparatus consists of a pentagonal prism (10), a mirror or a fibre-optic bundle.

9. Arrangement according to Claim 7, **characterized in that** the detector surface (26) is an image acquisition sensor (24) with a plurality of lines and rows of light-sensitive elements.

10. Arrangement according to Claim 9, **characterized in that** the image acquisition sensor (24) is a CCD chip or a CMOS sensor.

11. Arrangement according to Claim 7, **characterized in that** the light source (14) is a laser.

12. Arrangement according to Claim 11, **characterized in that** the light source (14) is embodied as a laser diode, wherein the light beam in the far-field of the laser diode has an elliptical cross-sectional intensity distribution.

13. Arrangement according to one of Claims 7 to 12, **characterized in that** a lens system with at least one cylindrical lens is situated between the light source (14) and the deflection apparatus (10).

14. Arrangement according to one of Claims 7 to 12, **characterized in that** at least one optical element with a non-radially-symmetric opening is situated between the light source (14) and the deflection apparatus (10).

15. Arrangement according to Claim 14, **characterized in that** the opening is not centrally symmetric.

## Revendications

1. Procédé destiné à déterminer le niveau d'au moins deux points de mesure (29, 30), dans lequel un faisceau lumineux est généré suivant une première direction (16), le faisceau lumineux est dévié de 90° par rapport à la première direction dans une deuxième direction (20), dans lequel la deuxième direction est soumise à une rotation, en fonction de la position du point de mesure, d'un certain angle de rotation autour d'un axe formé par la première direction, **caractérisé en ce que** le faisceau lumineux présente une distribution d'intensité en section transversale (42) ayant une direction préférentielle (40) et, après déviation dans la deuxième direction, **en ce qu'**il est incident sur une surface de détecteur (26) qui est positionnée de manière séquentielle en chaque point de mesure (29, 30), dans lequel le niveau d'incidence du faisceau lumineux et l'orientation de la direction préférentielle de la distribution d'intensité en section transversale du faisceau lumineux sur la surface de détecteur sont déterminées pour chaque point de mesure, et dans lequel l'angle de rotation est déterminé pour chaque point de mesure à partir de l'orientation respective de la direction préférentielle sur la surface de détecteur.

2. Procédé selon la revendication 1, **caractérisé en ce que** les niveaux des points de mesure (29, 30) sont déterminés sous la forme d'un écart par rapport à un plan de référence (15), dans lequel la première direction (16) est perpendiculaire au plan de référence.

3. Procédé selon la revendication 1, **caractérisé en ce que**, à partir des niveaux mesurés des points de mesure (29, 30), le plan de référence (15) est déterminé sous le forme d'un plan d'ajustement par rapport aux niveaux.

4. Procédé selon la revendication 1, **caractérisé en ce qu'**un système de lentille ou un écran est placé entre la source lumineuse et le détecteur pour générer la direction préférentielle de la distribution d'intensité en section transversale du faisceau lumineux.

5. Procédé selon la revendication 1, **caractérisé en ce qu'**un laser à semi-conducteur est utilisé en tant que source lumineuse (14), dont l'intensité lumineuse en champ lointain présente une direction préférentielle (40) de la distribution d'intensité en section transversale.

6. Procédé selon la revendication 1, **caractérisé en ce que** le détecteur est réalisé sous la forme d'un capteur plat (24).

7. Dispositif destiné à déterminer le niveau d'au moins deux points de mesure (29, 30), comprenant une surface de détecteur (26) et comprenant une source lumineuse (16) qui est conçue pour générer un faisceau lumineux suivant une première direction (16) d'un dispositif de déviation (10), pour dévier le faisceau lumineux de 90° par rapport à la première direction dans une deuxième direction (20), dans lequel le dispositif de déviation peut être mis en rotation autour d'un axe (12) formé par la première direction pour faire tourner la deuxième direction en fonction de la position du point de mesure respectif, **caractérisé en ce que** le faisceau lumineux présente une distribution d'intensité en section transversale (42) ayant une direction préférentielle (40) et **en ce qu'**après déviation dans la deuxième direction, il est incident sur la surface de détecteur (26) positionnée de manière séquentielle en chaque point de mesure (29, 30), et dans lequel la surface de détecteur est conçue de manière à ce que le niveau d'incidence du faisceau lumineux et l'orientation de la direction préférentielle de la distribution d'intensité en section transversale du faisceau lumineux sur la surface de détecteur soient déterminées pour chaque point de mesure.

8. Dispositif selon la revendication 7, **caractérisé en ce que** le dispositif de déviation est constitué d'un prisme pentagonal (10), d'un miroir ou d'un faisceau de fibres.

9. Dispositif selon la revendication 7, **caractérisé en ce que** la surface de détecteur (26) est un capteur d'acquisition d'image (24) comprenant plusieurs colonnes et lignes d'éléments photosensibles.

10. Dispositif selon la revendication 9, **caractérisé en ce que** le capteur d'image (24) est un capteur CCD ou un capteur CMOS.

11. Dispositif selon la revendication 7, **caractérisé en ce que** la source lumineuse (14) est un laser.

12. Dispositif selon la revendication 11, **caractérisé en ce que** la source lumineuse (14) est conçue sous la forme d'une diode laser, dans lequel le faisceau lumineux en champ lointain de la diode laser a une distribution d'intensité elliptique en section transversale.

13. Dispositif selon l'une des revendications 7 à 12, **caractérisé en ce que**, entre la source lumineuse (14) et le dispositif de déviation (10), se trouve un système de lentilles comprenant au moins une lentille cylindrique.

14. Dispositif selon l'une des revendications 7 à 12, **caractérisé en ce que**, entre la source lumineuse (14) et le dispositif de déviation (10), se trouve au moins un élément optique ayant une ouverture non radialement symétrique.

15. Dispositif selon la revendication 14, **caractérisé en ce que** l'ouverture n'est pas centralement symétrique.
